Europäisches Patentamt

European Patent Office

Office européen des brevets

(11) Veröffentlichungsnummer: **0 128 504**
**B1**

# EUROPÄISCHE PATENTSCHRIFT

(45) Veröffentlichungstag der Patentschrift:
**20.11.86**

(21) Anmeldenummer: **84106402.5**

(22) Anmeldetag: **05.06.84**

(51) Int. Cl.⁴: **B 60 K 15/02**

(54) **Kraftstoffbehälter mit Kraftstoffsammeleinrichtung.**

(30) Priorität: **07.06.83 DE 3320467**

(43) Veröffentlichungstag der Anmeldung:
**19.12.84 Patentblatt 84/51**

(45) Bekanntmachung des Hinweises auf die Patenterteilung:
**20.11.86 Patentblatt 86/47**

(84) Benannte Vertragsstaaten:
**AT BE CH DE FR GB IT LI NL SE**

(56) Entgegenhaltungen:
**DE - A - 2 830 443**

(73) Patentinhaber: **BASF Aktiengesellschaft,
Carl-Bosch-Strasse 38, D-6700 Ludwigshafen (DE)**

(72) Erfinder: **Jung, Norbert, Europa-Ring 18,
D-6840 Lampertheim 1 (DE)**
Erfinder: **Lindner, Edmund, Edenkobener Strasse 9,
D-6700 Ludwigshafen (DE)**
Erfinder: **Lohrbaecher, Volker, Kisslichstrasse 1,
D-6940 Weinheim (DE)**
Erfinder: **Schneiders, Arno, Berner Weg 34,
D-6700 Ludwigshafen (DE)**

**Beschreibung**

Die vorliegende Erfindung betrifft einen Kraftstoffbehälter mit einer Kraftstoffsammeleinrichtung gemäss dem Oberbegriff des Anspruches 1.

Bei Kraftfahrzeugen mit Verbrennungsmotorantrieb, deren Antriebsmaschinen mit Kraftstoffeinspritzung arbeiten, ist es erforderlich, dass während der Kraftstoffentnahme aus dem Kraftstoffbehälter bis zum völligen Aufbrauchen des Behälterinhalts keine Luft in das Kraftstoff-Fördersystem gelangt.

Bei solchen Fahrzeugen wird daher der Kraftstoff in der Regel aus einer Stelle des Behälters (Tanks) entnommen, an der sich bis zur völligen Entleerung immer Kraftstoff befindet. Es muss sichergestellt sein, dass auch beim Anfahren auf geneigter Ebene, bei Kurvenfahrten oder beim Befahren geneigter Fahrwege, ebenso wie beim Beschleunigen oder Verzögern während einer gewissen Zeit Kraftstoff luftblasenfrei aus dem Tank entnommen werden kann, selbst wenn sich die übrige im Tank befindliche Kraftstoffmenge an Stellen des Tanks sammelt, die von der Entnahmestelle entfernt sind. Das gilt insbesondere bei nahezu leerem Tank. Bei sehr flachen Tanks ist diese Forderung besonders schwierig zu lösen. Dies gilt dann auch für Antriebsmaschinen mit Vergaserbetrieb.

Da aus räumlichen Gründen eine diesen Effekt bewirkende, unter dem Behälterniveau liegende sackähnliche Vertiefung des Behälterbodens nur selten anwendbar ist, wurden Vorrichtungen geschaffen, die, im Behälter liegend, ein Sammeln des Kraftstoffrestes an der Entnahmestelle bewirken.

Im allgemeinen handelt es sich hier um topfförmige, vom Behälter eingeschlossene, aber von dem übrigen Volumem des Behälters abgeteilte Teilvolumina, in denen sich der Kraftstoff ansammelt.

Solche Sammeleinrichtungen werden auch Beruhigungstöpfe, Schlingertöpfe oder Kraftstoff-Staubecken genannt.

Zur Unterstützung der Kraftstoffansammlung in dem Beruhigungstopf bedient man sich entweder der Saugwirkung des in den Tank zurückgeförderten Überschusses an entnommenem Kraftstoff oder man wendet ein mit dem Beruhigungstopf zusammenwirkendes Fangsystem aus Leitwänden an, das z.B. aus um den Sammelraum herum angeordneten, ring- oder spiralförmigen Wänden besteht. Diese Leitwände sollen durch die Wirkung der Kraftstoffbewegung im Tank ein Ansammeln des Kraftstoffes in dem Beruhigungstopf begünstigen.

Nachteilig an einem, den Beruhigungstopf umgebenden System von Leitwänden ist sein verhältnismässig grosser Platzbedarf, der verhältnismässig grosse Aufwand an Leitwänden und der Umstand, dass solchen Leitsystemen im allgemeinen eine erwünschte, besonders kräftige Wirkung zum Sammeln kleiner Kraftstoffrestmengen fehlt. Es gibt auch Fangsysteme, die aus am Beruhigungstopf angebrachten, trichterförmigen Öffnungen mit darin angebrachten Rückschlagklappen bestehen. Nachteilig daran ist der Fertigungsaufwand für Trichter und Rückschlagklappen. Eine solche Vorrichtung zum Zuführen des Kraftstoffes ist aus DE-A-2830 443 bekannt.

Weiterhin ist ein Beruhigungstopf bekannt, der in seiner Wand einen Schlitz aufweist, vor dem, ausserhalb des Beruhigungstopfes angeordnet, zwei vertikale Wände so angebracht sind, dass sie im Winkel zueinander stehen, so dass die Spitze dieses Winkels auf den Schlitz zeigt. Diese Einrichtung erfordert zum Erzielen ihrer Wirkung zwei vertikale Wände und benötigt mehr Platz als bei mitunter vorliegenden beengten räumlichen Verhältnissen zur Verfügung steht. Beim Ausformen der vertikalen Wände und des Beruhigungstopfes aus Falten (Sicken) der Wände des Kraftstoffbehälters kann das Ausbilden der in einer Nachbarschaft stehenden Wandungen des Beruhigungstopfes und der beiden vertikalen Wände zu Schwierigkeiten bezüglich der erzielbaren Wanddicken führen.

Schliesslich ist es bekannt, in der Wand eines aus zwei einander gegenüberliegenden Tankwandungen herausgeformten Beruhigungstopfes Durchbrüche anzubrigen, die auch V-förmig gestaltet sein können und an ihrer tiefsten Stelle eine Schwelle zum Zurückhalten des in dem Topf angesammelten Kraftstoffes besitzen. Diese Vorrichtung ist nicht geeignet, eine aktive Förderwirkung auf den im übrigen Tankraum befindlichen Kraftstoff in Richtung Beruhigungstopf auszuüben.

Es bestand daher die Aufgabe, eine das Ansammeln des Kraftstoffes im Beruhigungstopf begünstigende Leiteinrichtung zu finden, die wenig Platz beansprucht, ein aktives Fördern des Kraftstoffes in den Beruhigungstopf bewirkt, einfach aufgebaut ist und auch ihre Herstellung in einem Stück mit der Tankwandung möglich macht.

Erfindungsgemäss wird diese Aufgabe durch die kennzeichnenden Merkmale der Patentansprüche gelöst.

Der Erfindungsgegenstand ist in den Figuren 1 bis 10 dargestellt.

Figur 1 ist ein Horizontalschnitt entsprechend Schnitt A-A von Figur 2 und zeigt eine Draufsicht auf den Erfindungsgegenstand.

Figur 2 ist ein Querschnitt entsprechend Schnitt B-B in Figur 1 durch einen mit dem Erfindungsgegenstand ausgerüsteten Kraftstoffbehälter.

Figur 3 zeigt einen vergrösserten Teilausschnitt von Figur 1.

Figur 4 ist ein vergrösserter Teilausschnitt von Figur 3 mit einer besonderen Ausführungsform der Schwelle nach Figur 2.

Figur 5 zeigt eine besondere Ausführungsform der Schwallwand.

Figur 6 ist eine Ansicht in Pfeilrichtung D nach Figur 4 gegen die schlitzförmige Öffnung des Beruhigungstopfes.

Figur 7 zeigt als Beispiel eine Variante des Erfindungsgegenstandes nach Figur 1, wie sie besonders vorteilhaft gestaltet werden kann, wenn der Kraftstoffbehälter einschliesslich des Erfindungsgegenstandes aus einem Stück durch Verformen eines flächigen Gebildes, Blech, Kunststoffplatte, schlauchförmiger Vorformling, hergestellt wird.

Figur 8 ist ein Querschnitt nach Schnittlinie C-C in Figur 7.

Figur 9 ist ein vergrösserter Teilausschnitt nach Schnitt E-E in Figur 8.

Figur 10 ist ein weiterer vergrösserter Teilausschnitt F-F nach Figur 7.

In einem Kraftstoffbehälter 1 für ein Kraftfahrzeug mit Verbrennungsmotor befindet sich ein Beruhigungstopf 2, der durch eine auf dem Boden 3 des Kraftstoffbehälters 1 stehende Wand 4 von kreisförmigem oder beliebig anderem Umriss gebildet wird. Die Wand 4 des Beruhigungstopfes 2 weist an einer Stelle eine schlitz- oder V-förmige Öffnung 5 auf. Die Öffnung 5 wird durch die beiden Kanten 6, 7 und gegebenenfalls durch eine Schwelle 8 begrenzt.

Gegenüber der Öffnung 5 und im Winkel dazu befindet sich eine Schwallwand 9, die, im wesentlichen ausserhalb des Beruhigungstopfes 2 liegend, sich bis an die der Öffnung 5 gegenüberliegende Wand 10 des Kraftstoffbehälters 1 erstrecken kann.

Die Schwallwand 9 bewirkt, dass der durch die Bewegungen des Fahrzeuges erzeugte Schwall des Kraftstoffes, sei es bei einer Schwallbewegung in Pfeirichtung X, oder auch bei einer Bewegung in einer der beiden Richtungen Y einen in den Beruhigungstopf 2 gerichteten Förderstrom erzeugt, wie er beispielsweise durch die Pfeile Z dargestellt ist. Dieser Förderstrom bewirkt, dass der Beruhigungstopf 2 bis zum vollständigen Aufbrauchen des Tankinhalts soweit mit Kraftstoff gefüllt ist, so dass die innerhalb des Beruhigungstopfes 2 liegende, in den Figuren nicht dargestellte Entnahmeeinrichtung stets mit Kraftstoff versorgt ist.

Die Höhe des im Beruhigungstopf 2 stehenden Kraftstoffvorrates richtet sich nach dem Abstand der Entnahmeeinrichtung über dem Boden des Beruhigungstopfes 2. Sie kann durch die Höhe b der Schwelle 8 eingestellt werden. Die Höhe h der Schwallwand 9 richtet sich nach der Höhe b der Schwelle 8. Die Wirkung der Schwallwand 9 ist dann besonders gut, wenn das Mass h mindestens dem 1,5 fachen des Masses b entspricht.

Die Förderwirkung der Schwallwand 9 wird verbessert, wenn sie zwischen der Öffnung 5 und der Wand 10 mit strömungsgünstigem Profil 11 verläuft.

Auch eine strömungsgünstige Ausbildung 13 der ausserhalb des Beruhigungstopfes 2 liegenden Kante der Schwelle 8 begünstigt das Füllen des Beruhigungstopfes 2.

Einen weiteren Einfluss auf die Förderwirkung der Schwallwand 9 hat der Abstand a zwischen der Vorderkante 20 der Schwallwand 9 und der dieser Vorderkante 20 zugewendeten Seite der Öffnung 5. Die Förderwirkung ist besonders gut, wenn das Mass a Null oder sogar negativ ist. d.h. wenn die Vorderkante 20 der Schwallwand 9 in die Öffnung 5 hineinragt.

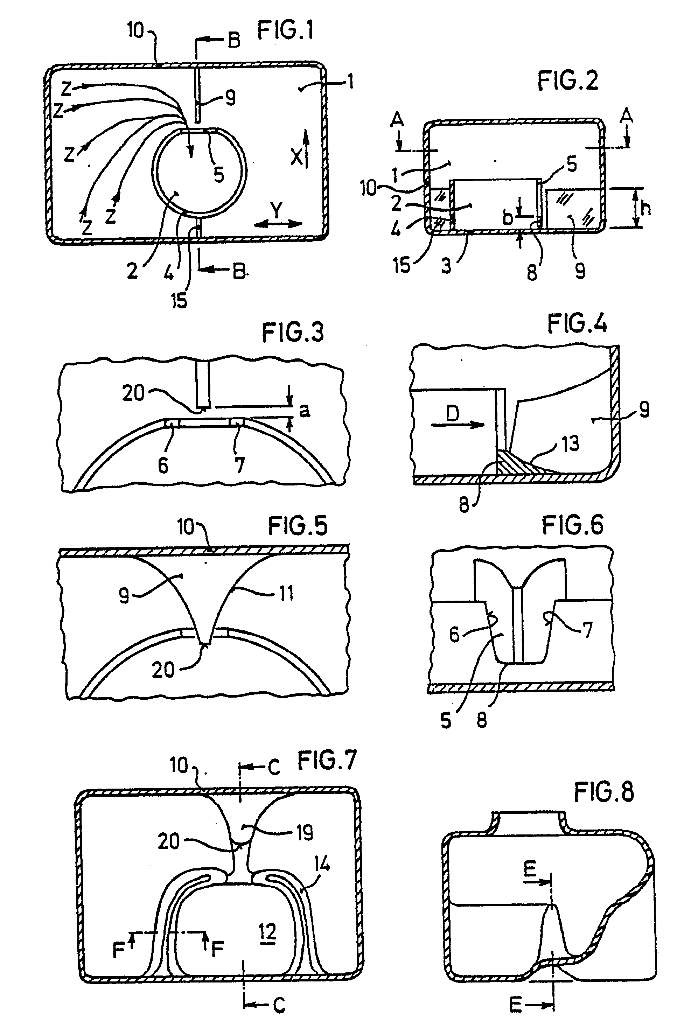

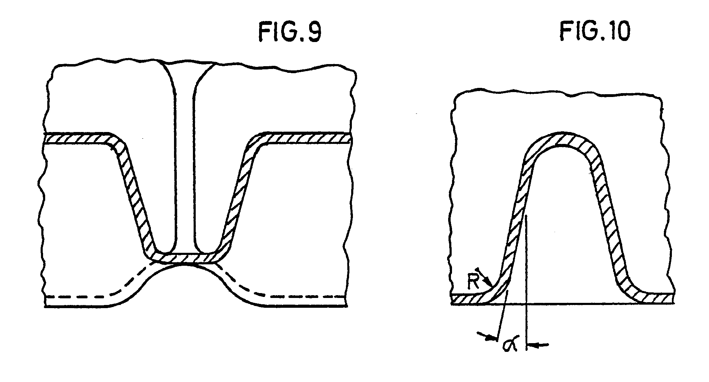

Die Förderwirkung ist aber auch dann noch ausreichend, wenn, wie in den Figuren 1 bis 10 dargestellt, die Wandungen 14 des Beruhigustopfes 12, die Schwallwand 19 und die Schwelle 18 durch aus der Wand des Kraftstoffbehälters 1 herausgeformte Falten (Sicken) gebildet werden und die Vorderkante 20 somit ausserhalb des Beruhigungstopfes 12 liegt. Die Ausbildung solcher Sicken wird begünstigt, wenn ihre Begrenzungswände mit Neigungswinkel α und ihre Übergänge zu den Tankwandungen und zueinander mit Radien R ausgestattet werden.

Durch eine Sperrwand 15 zwischen der Wand 4 des Beruhigungstopfes 2 und der der Wand 10 gegenüberliegenden Wand des Kraftstoffbehälters 1 kann der Kraftstoffschwall gezwungen werden, seinen Weg vorwiegend in Richtung der Schwallwand 9 zu nehmen, wodurch der Effekt des Füllens des Beruhigungstopfes 2 verstärkt wird. Auch diese Sperrwand 15 kann in Form einer Sicke ausgebildet werden.

## Patentansprüche

1. Kraftstoffbehälter mit Kraftstoffsammeleinrichtung, bestehend aus einem eigentlichen Kraftstoffbehälter (1), einem in seinem Innenraum auf dem Boden (3) stehenden, durch die Wand (4) gebildeten Beruhigunstopf (2), mit einer durch Kanten (6, 7) und gegebenenfalls eine Schwelle (8) begrenzten Öffnung (5) und einer Schwallwand (9), die sich im wesentlichen ausserhalb des Beruhigungstopfes (2) bis zu der der Öffnung (5) gegenüberliegenden Wand (10) des Kraftstoffbehälters (1) erstreckt, dadurch gekennzeichnet, dass die Schwallwand (9, 19) mittig gegenüber der Öffnung (5) und im Winkel dazu angeordnet ist.

2. Kraftstoffbehälter nach Anspruch 1, dadurch gekennzeichnet, dass die Schwallwand (9) in die Wand (10) mit strömungsgünstigem Profil (11) einmündet.

3. Kraftstoffbehälter nach Anspruch 1 und 2, dadurch gekennzeichnet, dass der ausserhalb des Beruhigungstopfes (2) liegende Bereich der Schwelle (8) eine strömungsgünstige Ausbildung (13) aufweist.

4. Kraftstoffbehälter nach Anspruch 1 bis 3, dadurch gekennzeichnet, dass das Höhenmass h der Schwallwand (9) mindestens das 1,5 fache der Höhe b der Schwelle (8) beträgt.

5. Kraftstoffbehälter nach Anspruch 1 bis 4, dadurch gekennzeichnet, dass zwischen der Wand des Beruhigungstopfes (2) und der seiner Öffnung (5) abgewandten Wand des Kraftstoffbehälters (1) eine Sperrwand (15) angeordnet ist.

6. Kraftstoffbehälter nach Anspruch 1 bis 5, dadurch gekennzeichnet, dass die Wände (14) des Beruhigungstopfes (12) und/oder die Schwallwand (19) sowie gegebenenfalls die Sperrwand (15) durch aus der Wand des Kraftstoffbehälters (1) herausgeformte Falten (Sicken) gebildet werden.

7. Kraftstoffbehälter nach Anspruch 6, dadurch gekennzeichnet, dass die Begrenzungswände der Sicken mit Neigungswinkeln (α) und die Übergänge von den Sicken zu den Tankwandungen und zueinander mit Radien (R) ausgestattet sind.

## Claims

1. A fuel tank with a fuel-collecting device, comprising a body portion (1); an anti-surge chamber (2) formed by a wall (4) and located in the tank's interior space on the tank bottom (3), the said wall having an opening (5) delimited by edges (6, 7) and an optional threshold (8); and a baffle (9) which extends essentially from outside the anti-surge chamber (2) to the wall (10) of the body portion (1) facing the opening (5), wherein the baffle (9, 19) is arranged opposite the middle of opening (5) and at an angle thereto.

2. A fuel tank as claimed in claim 1, wherein the baffle (9) merges into wall (10) and has a flow-promoting profile (11).

3. A fuel tank as claimed in claim 1 and 2, wherein the portion of the threshold located outside the anti-surge chamber (2) has a flow-promoting shape (13).

4. A fuel tank as claimed in claim 1 to 3, wherein the height h of baffle (9) is at least 1,5 times the height b of threshold (8).

5. A fuel tank as claimed in claims 1 to 4, wherein a partition (15) is arranged between the wall of the anti-surge chamber (2) and the wall of the body portion (1) opposite the wall facing the opening (5).

6. A fuel tank as claimed in claims 1 to 5, wherein the walls (14) of the anti-surge chamber (12) and/or the baffle (19) and, if desired, the partition (15) are in the form of folds (crimps) made from the wall of the body portion (1).

7. A fuel tank as claimed in claim 6, wherein the walls of the crimps are inclined at an angle ($\alpha$), and the transition regions between the crimps and the tank walls, and the crimps themselves, are curved with a radius (R).

**Revendications**

1. Réservoir de carburant à moyen collecteur de carburant, constitué d'un réservoir de carburant proprement dit (1), un pot de stabilisation (2) formé par le paroi (4), disposé sur le fond (3) du réservoir (1) et comportant une ouverture (5) délimitée par des arêtes (6, 7) et éventuellement un seuil (8), et une paroi brise-flot (9) qui s'étend essentiellement à l'extérieur du pot de stabilisation (2) jusqu'à la paroi (10) du réservoir (1) située face à l'ouverture (5), caractérisé par le fait que la paroi brise-flot (9, 19) est disposée dans le plan médian de l'ouverture (5) et inclinée par rapport à elle.

2. Réservoir de carburant selon la revendication 1, caractérisé par le fait que la paroi brise-flot (9) se raccorde à la paroi (10) selon un profil (11) favorable à l'écoulement.

3. Réservoir de carburant selon les revendications 1 et 2, caractérisé par le fait que la zone du seuil (8) située à l'extérieur du pot de stabilisation (2) possède une configuration (13) favorable à l'écoulement.

4. Réservoir de carburant selon la revendication 3, caractérisé par le fait que la hauteur h de la paroi brise-flot (9) est au moins 1,5 fois la hauteur b du seuil (8).

5. Réservoir de carburant selon l'une des revendications 1 à 4, caractérisé par le fait qu'entre la paroi du pot de stabilisation (2) et la paroi du réservoir de carburant (1) éloignée de l'ouverture (5) de ce pot, est disposée une paroi de barrage (15).

6. Réservoir de carburant selon l'une des revendications 1 à 5, caractérisé par le fait que les parois (14) du pot de stabilisation (12) et/ou la paroi brise-flot (19), ainsi qu'éventuellement la paroi de barrage (15) sont formées par des plis (moulures) formés à partir de la paroi du réservoir de carburant (1).

7. Réservoir de carburant selon la revendication 6, caractérisé par le fait que les parois limitant les plis sont formées avec des angles d'inclinaison ($\alpha$) et les zones de passage des plis aux parois du réservoir et de l'un à l'autre, avec des rayons (R).

FIG.1

FIG.2

FIG.3

FIG.4

FIG.5

FIG.6

FIG.7

FIG.8

5

FIG.9

FIG.10